(19) Europäisches Patentamt
European Patent Office
Office européen des brevets

(11) Publication number: 0 015 044
A2

# (12) EUROPEAN PATENT APPLICATION

(21) Application number: 80300044.7

(22) Date of filing: 04.01.80

(51) Int. Cl.[3]: C 07 C 125/065
A 01 N 47/12

(30) Priority: 22.01.79 GB 7902198

(43) Date of publication of application:
03.09.80 Bulletin 80/18

(84) Designated Contracting States:
BE CH DE FR GB IT LU NL SE

(71) Applicant: IMPERIAL CHEMICAL INDUSTRIES LIMITED
Imperial Chemical House Millbank
London SW1P 3JF(GB)

(72) Inventor: Gazzard, Edward George
291 Withington Road
Chorlton-cum-Hardy Manchester, M21 1YA(GB)

(74) Representative: Pugsley, Roger Graham et al,
Imperial Chemical Industries Limited Legal
Department:Patents Millbank
London SW1P 4QG(GB)

## (54) Tri-iodoalkenyl esters of N-substituted carbamic esters, their preparation and their use as biocides.

(57) Triiodoalkenyl esters of N-(substituted)hydrocarbyl carbamic acids of formula:

$$[I_2C=CI(CH_2)_nOCONH]_mR$$

in which R is a substituted or unsubstituted alkyl, cycloalkyl, aryl, aralkyl or alkylaryl group having from 1 to 20 carbon atoms and having from 1 to 3 linkages corresponding to *m*, and *m* and *n* are whole number integers from 1 to 3 and may be the same or different; methods for the preparation of these compounds and their use as biocides, particularly as fungicides and especially as paint film fungicides.

EP 0 015 044 A2

This invention relates to biocides and more particularly to biocidal triiodoalkenyl esters of N-(substituted)hydrocarbylcarbamic acids, their preparation and their use.

US Patent Specification No. 3923870 discloses compounds having the formula:

$$\left[ IC{\equiv}C{-}(CH_2)_nOCONH \right]_m R$$

wherein R is a substituted or unsubstituted alkyl, aryl or alkylaryl group having from 1 to 20 carbon atoms and having from 1 to 3 linkages corresponding to m, and m and n are whole number integers from 1 and 3 and may be the same or different. These compounds have fungicidal activity, and are particularly useful as paint film fungicides.

According to the present invention there are provided compounds having the formula:

$$\left[ I_2C{=}CI(CH_2)_nOCONH \right]_m R$$

wherein R is alkyl, cycloalkyl, aryl, aralkyl or alkylaryl having from 1 to 20 carbon atoms and up to m linkages each R being unsubstituted or substituted by a group selected from hydroxy, lower alkoxy and halo and m and n are independent integers from 1 to 3.

Examples of the groups represented by R are methyl, ethyl, n-propyl, isopropyl, n-butyl, t-butyl, hexyl, 2-ethylhexyl, n-octyl, n-dodecyl, n-hexadecyl, n-octadecyl, 2-chloroethyl, 1-bromoethyl, 2-methoxyethyl, 2-ethoxyethyl, 2-n-butoxyethyl, cyclohexyl, allyl, phenyl, 2-, 3- and 4-methylphenyl, 2-, 3- and 4-ethylphenyl, 2-, 3- and 4-chloro (or bromo)phenyl, 3,4-dichlorophenyl, 2-, 3- and 4-methoxy (or ethoxy) phenyl, benzyl, 2-phenylethyl, ethylene,

tetramethylene, hexamethylene, isophoran-di-yl, phenylene, chlorophenylene, tolylene, methylene bis(4-phenylyl) and toluene-2,4,6-tri-yl.

Preferred groups represented by R are optionally substituted lower alkyl, $C_2$-$C_6$alkylene, monocyclic aryl and monocyclicarylene.

According to a further feature of the invention there is provided a process for the manufacture of the compounds having the formula:

$$\left[I_2C{=}CI(CH_2)_nOCONH\right]_m R$$

wherein R, <u>m</u> and <u>n</u> have the meanings stated above, which comprises reacting a triiodoalkenol having the formula:

$$I_2C{=}CI(CH_2)_n OH$$

with an isocyanate of the formula $R(NCO)_m$

The triiodoalkenols having the above formula in which <u>n</u> is 1, 2 or 3 are known compounds. Triiodoallyl alcohol and 1,1,2-triiodobut-1-ene-4-ol are mentioned in Volume 1 of Beilstein's Handbuch der Organischen Chemie at pages 440 and 442 respectively. 1,1,2-Triiodopent-1-ene-5-ol is disclosed in Chemical Abstracts, Volume 26, page 2166 (1932).

This process can be carried out by methods which are well known in the urethane art. Thus, the isocyanate may be added to the triiodoalkenol at a rate such that the reaction temperature is readily controllable, if desired with the aid of external cooling. The reaction may be carried out in the absence of a solvent, or a solvent which is inert to isocyanate groups may be used. Examples of suitable solvents are esters such as ethyl acetate, butyl acetate and 2-ethoxyethyl acetate, ketones such

as methyl ethyl ketone, methyl isobutyl ketone, cyclohexanone and 4-methoxy-4-methylpentan-2-one, hydrocarbons such as toluene and xylene, halogenated hydrocarbons such as trichloroethylene, methylene dichloride, 1,1,1-trichloroethane and tetrachloroethylene, and polar aprotic solvents such as dimethyl formamide and dimethylacetamide.

There may also be used a catalyst of the kind which accelerates reaction between an isocyanate group and a hydroxyl group. As examples of such catalysts there may be mentioned organic and inorganic basic compounds, and soluble compounds of metals, for example, of transition metals, such as iron and manganese acetylacetonate, and of tin or antimony, for example, dibutyl tin dilaurate and stannous octoate; compounds of lead such as lead acetate, basic lead acetate and lead 2-ethylhexoate. As basic organic catalysts tertiary amines are suitable, particularly triethylamine, 4-dimethylaminopyridine, triethylenediamine, dimethylbenzylamine and dimethylcyclohexylamine. Particularly advantageous are mixtures of metallic and amine catalysts. The amount of catalyst used will depend upon its activity, the temperature used and the rate of reaction desired, but in general an amount from 0.02 to 1.0% by weight, based on the weight of triiodoalkenol, will be appropriate. The reaction may be carried out at normal room temperature, e.g. 15 to 25°C, or at a moderately elevated temperature up to 40°C, the temperature preferably being finally raised to 50-60°C or somewhat higher, e.g. up to 100°C, to ensure completion of the reaction. The resulting triiodoalkenylcarbamate may be isolated from the reaction mixture by conventional means.

According to a yet further feature of the invention there is provided a process for the manufacture of the compounds having the formula:

$$\left[ I_2C{=}CI(CH_2)_nOCONH \right]_m R$$

wherein R, m and n have the meanings stated above, which comprises iodinating an alkynylcarbamate having the formula:

$$\left[ HC{\equiv}C(CH_2)_nOCONH \right]_m R$$

wherein R, m and n have the meanings stated above.

The reaction may be carried out by the addition of iodine to the copper derivative of the alkynylcarbamate, the iodine conveniently being added in the form of a solution in aqueous potassium iodide. The copper derivative of the alkynylcarbamate may be prepared, for example, by addition of the latter to a solution of cuprous chloride in aqueous ammonium carbonate at ambient temperature, when the copper derivative separates and is isolated as a moist cake which is used as such in the iodination stage.

The alkynylcarbamates having the above-defined formula may themselves be obtained by reaction of the appropriate alkynol having the formula:

$$HC{\equiv}C(CH_2)_nOH$$

with an isocyanate having the formula $R(NCO)_m$, R, m and n having the meanings stated above, the reaction being carried out under similar conditions to those described previously for the reaction of a triiodoalkenol $I_2C{=}CI(CH_2)_nOH$ with an isocyanate $R(NCO)_m$. The alkynols of the above formula in which n is 1, 2 or 3 are known compounds. Propargyl alcohol and but-1-yn-4-ol are mentioned in Volume 1 of Beilstein's Handbuch der Organischen Chemie at pages 454 and 455 respectively. Pent-1-yn-5-ol is disclosed in Chemical Abstracts, Volume 26, page 2166 (1932).

According to a still further feature of the invention there is provided a process for the manufacture of the compounds having the formula:

$$\left[I_2C{=}CI(CH_2)_nOCONH\right]_m R$$

wherein R, m and n have the meanings stated above which comprises iodination of compounds having the formula:

$$\left[IC{\equiv}C(CH_2)_nOCONH\right]_m R$$

wherein R, m and n have the meanings defined above. Monoiodoalkynyl esters of N-(substituted)hydrocarbyl carbamic acids having above formula in which the hydrocarbyl group R is an alkyl, aryl or alkylaryl group having from 1 to 20 carbon atoms are described in US Patent Specification No. 3923870 already referred to, together with one method for their preparation, namely iodination of an alkynol of formula $HC{\equiv}C.(CH_2)_nOH$ to give $IC{\equiv}C(CH_2)_nOH$, followed by reaction of the latter with an isocyanate having the formula R(NCO)m. These monoiodoalkynyl esters of N-(substituted)hydrocarbyl carbamic acids may also be prepared by reacting an alkynol having the formula $HC{\equiv}C(CH_2)_nOH$ with an isocyanate having the formula $R(NCO)_m$ to give a carbamate having the formula $\left[HC{\equiv}C(CH_2)_nOCONH\right]_m R$, followed by iodination of the latter. The corresponding monoiodoalkynyl carbamates in which R is a cycloalkyl or arylalkyl group may be prepared by strictly analogous methods.

The conversion of the monoiodoalkynyl derivative into the corresponding triiodoalkenyl compound may be achieved by the copper- or ultraviolet radiation-catalysed direct addition of molecular iodine to the latter compound, which may be dissolved in a suitable solvent, for example, ethanol. The triodo compound may be isolated from the reaction by conventional means.

The new triiodoalkenyl esters of N-(substituted) hydrocarbylcarbamic acids hereinbefore described have biocidal activity, and according to a still further feature of the present invention there is provided a method for protecting a medium which is susceptible to attack by micro-organisms against such attack, and controlling or preventing the proliferation of micro-organisms in a medium already infected thereby, which comprises adding to the said medium a biocidal amount of a compound having the formula:

$$\left[ I_2C{=}CI(CH_2)_nOCONH \right]_m R$$

wherein R, m and n have the meanings stated above.

In the above definition, preventing the proliferation of micro-organisms means that the micro-organisms are not allowed to multiply further, the number of micro-organisms not necessarily being substantially altered. Controlling the proliferation of micro-organisms means that the rate of multiplication of the micro-organisms is either reduced or rendered negative (i.e. a reduction in numbers, including the case of complete eradication).

"Micro-organisms" in this specification means bacteria, fungi and algae.

The triiodoalkenylcarbamates of the present invention are particularly valuable in respect of their fungicidal activity, and they are especially useful as paint film fungicides.

The amount of the biocide which is used will depend upon the medium being treated and the nature of the micro-organisms involved, but for aqueous media, for example, the cooling water systems of power stations, the water systems of paper mills, aqueous oil emulsions such as the cutting oils used as lubricants and coolants in the machining of metals and in water-based paints and adhesives, an amount from 1 to 1000 parts per million by weight, based on the weight of the medium, may be used, from 25 to 500 parts per million by weight being generally effective.

When used as a paint film fungicide the biocide will generally be used in an amount to provide a concentration in the paint, before its application to a substrate, of from 500 to 10,000 parts per million by weight, based on the weight of the paint.

The biocidal compound may be added to the appropriate medium as the undiluted solid compound, as a solution in an organic solvent, for example, a lower alkanol such as methanol or ethanol, or dimethylformamide, if desired together with water, or as a dispersion in water prepared with the aid of a dispersing agent, for example, the sodium salt of a naphthalene-2-sulphonic acid/formaldehyde condensate.

The invention is illustrated by the following Examples in which parts and percentages are by weight unless otherwise stated, the ratio of parts by weight to parts by volume being that of the kilogram to the litre, and in which ppm means parts per million.

Example 1

Preparation of $I_2C{=}CICH_2OCONHC_4H_9$-(n) (Triodopropenyl-N-n-butylcarbamate)

Cuprous chloride (8 parts), ammonium carbonate (20 parts) and water (200 parts) are stirred together at 50°C to form a solution, which is then cooled to ambient temperature (15-25°C). Propargyl N-n-butylcarbamate (6.2 parts) is added dropwise to the copper solution, the mixture is stirred for 1 hour and then filtered. The filter cake is washed with water until the washings are colourless, and the moist cake is suspended in ethanol (200 parts by volume) and water (150 parts). The suspension is cooled to 10°C and a solution of iodine (10.4 parts) and potassium iodide (10.4 parts) in water (25 parts) is added dropwise with stirring during 30 minutes. The temperature is then allowed to rise to ambient.

The reaction mixture is filtered to remove impurities and the filtrates are evaporated under reduced pressure to remove ethanol. The resulting solution is extracted with ether (2 x 200 parts by volume), the extracts are combined and washed with aqueous potassium iodide solution (6 x 50 parts by volume), dried over anhydrous magnesium sulphate, filtered and evaporated under reduced pressure to constant weight, yielding a dark red solid (10.5 parts).

This solid is dissolved in acetone (15.75 parts by volume) and the resulting solution is poured into water (100 parts). The mixture is stirred for 1 hour and filtered to yield a brown solid, which is recrystallised from butanol: petroleum ether (boiling range 60-80°C) (in the proportions 1:4 by volume) to yield a light brown solid (6.7 parts), m.p. 114-115°C. The infra-red spectrum shows bands at 3310$cm^{-1}$ corresponding to an -NH- group; 1670$cm^{-1}$

corresponding to C=O stretching frequency, and 770-710cm$^{-1}$ corresponding to the C-halogen bond.

Example 2

Preparation of $I_2C=CICH_2OCONHC_4H_9$-(tert) (Triiodopropenyl N-t-butylcarbamate)

Triiodoallyl alcohol (6 parts), and dibutyl tin dilaurate (0.5 part) dissolved in toluene (50 parts by volume) are stirred together at 20-25°C. Tertiary butyl isocyanate (1.36 parts) is added dropwise whilst maintaining the temperature at 20-25°C. The reaction mixture is stirred for a further two hours at 20-25°C, then heated at 50°C for 2½ hours and finally allowed to cool to ambient temperature. The resulting solution is filtered and the filtrate is evaporated under reduced pressure to remove the solvent. The crude product so obtained is recrystallised from n-butanol to yield a solid (2.2 parts), m.p. 95.0-95.5°C. The infra-red spectrum shows bands at 3340cm$^{-1}$ (-NH- group), 1680 cm$^{-1}$ (C=O group) and 710, 735, 770 cm$^{-1}$ (C-halogen).

Example 3

Comparison of the In-Vitro Antifungal Activity of Triiodopropenyl N-n-butylcarbamate (A) (Compound of Example 1) and Monoiodopropargyl N-n-butylcarbamate (B)

Solutions of the test compounds in dimethylformamide are prepared having strengths such that 1 ml of solution when added to 100 g portions of molten malt agar gives concentrations of 2.0, 1.0, 0.5 and 0.1 ppm respectively of the active ingredient. Approximately 15 to 20 ml of the treated molten agar preparations are poured into each of several Petri dishes.

Spore suspensions of the fungi Pullularia pullulans, Aspergillus niger, Cladosporium sphaerospermum, Alternaria alternata and Chaetomium globosum are prepared as follows:

Approximately 50 ml of molten Malt Extract Agar (Oxoid) are added to a 250 ml sterile, cotton wool plugged flask. The flask is inoculated with a small agar plug from a sporing culture of the appropriate fungus, and is then incubated at 25°C in the dark for 14 days.

Approximately 20 3 mm sterile glass beads and 20 ml of sterile deionised water are added and the flask is transferred to an orbital shaker and shaken at 100 revolutions per minute for 30 minutes. The resulting suspension is poured into a bottle containing 80 ml of sterile deionised water.

A Microtiter AM 80 Automatic Inoculator is used for inoculating the fungicide-containing malt agar plates with the above-mentioned fungal suspensions.

The malt agar plates after inoculation are incubated at 25°C for 5 days, after which they are examined for the presence or absence of fungal growth.

Results are as follows:-

| Compound | Concentration. | Pullularia pullulans | Aspergillus niger | Cladosporium sphaerospermum | Alternaria alternata | Chaetomium globosum |
|---|---|---|---|---|---|---|
| A | 2.0 ppm | - | - | - | - | - |
| | 1.0 ppm | - | - | - | - | - |
| | 0.5 ppm | - | + | - | - | - |
| | 0.1 ppm | - | + | - | - | + |
| B | 2.0 ppm | - | - | - | - | - |
| | 1.0 ppm | - | - | - | - | - |
| | 0.5 ppm | - | + | - | - | - |
| | 0.1 ppm | + | + | + | + | + |

In the above table "+" indicates presence of fungal growth and "-" indicates absence of fungal growth. From these results it can be seen that compound A (a compound according to the present invention) is a more effective fungicide than compound B.

Example 4

Preparation of 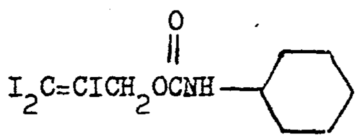 Triiodopropenyl N-cyclohexylcarbamate)

To a suspension of triiodoallylalcohol (8.4 parts) in toluene (50 parts) are added the two catalysts, triethylamine (0.1 part) and di-butyltindilaurate (0.1 part). To this mixture, with constant stirring, is added cyclohexylisocyanate (2.5 parts); a slight exotherm of one (1) degree occurs.

The temperature is raised to 50°C; at 35°C the reaction mixture becomes more viscous and cream coloured. It is held at 50°C for one (1) hour to ensure complete reaction. On cooling to room temperature, the solid is filtered off, washed with a little cold toluene, and dried at the pump.

The resultant white solid (8.48 parts) melts at 158-159°C; an I.R. spectrum shows peaks at 3290cm$^{-1}$ (NH stretch) and 1665cm$^{-1}$ (C=O stretch). The solid is recrystallised from n-butanol to give white needles [(7.55 parts) ≡ 70% yield] melting point of 162-164°C.

Example 5

Preparation of 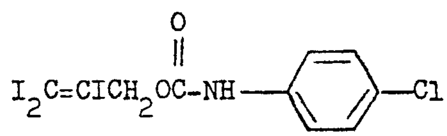 (Triiodopropenyl N-p-chlorophenyl-carbamate)

---

This compound is prepared by the method described in Example 4 except that the 2.5 parts of cyclohexyl isocyanate is replaced by 3.06 parts of p-chlorophenylisocyanate.

The resultant white solid formed in this way (9.09 parts) melts at 164-165°C. An IR spectrum shows peaks at 3290$cm^{-1}$ (NH stretch) and 1665$cm^{-1}$ (C=O stretch). The solid is recrystallised from n-butanol to give pale yellow needles (8.5 parts : 75% yield) with a melting point of 165°C.

Example 6

Solutions of the compounds in dimethylformamide are prepared having strengths such that 1 ml of solution when added to 100g portions of molten malt agar gives concentrations of 100, 10 and 10 ppm respectively of the active ingredient. Approximately 15 to 20 ml of the treated molten agar preparations are poured into each of several Petri dishes.

Spore suspensions of the fungi *Pullularia pullulans*, *Aspergillus niger*, *Cladosporium sphaerospermum*, *Alternaria alternata* and *Chaetomium globosum* are prepared as follows:

Approximately 50 ml of molten Malt Extract Agar (oxoid) are added to a 250 ml sterile, cotton wool plugged flask. The flask is inoculated with a small agar plug from a sporing culture of the appropriate fungus, and is then incubated at 25°C in the dark for 14 days.

Approximately 20 3mm sterile glass beads and 20 ml of sterile deionised water are added and the flask is transferred to an orbital shaker and shaken at 100 revolutions per minute for 30 minutes. The resulting suspension is poured into a bottle containing 80 ml of sterile deionised water.

A Microtiter AM 80 Automatic Inoculator is used for inoculating the fungicide-containing malt agar plates with the above-mentioned fungal suspensions.

The malt agar plates after inoculation are incubated at 25°C for 5 days, after which they are examined for the presence or absence of fungal growth.

Results are as follows:-

| Compound of: | Concentration | Pullularia pullulans | Aspergillus niger | Cladosporium sphaerospermum | Alternaria alternata | Chaetomium globosum |
|---|---|---|---|---|---|---|
| Example 4 | 100 | - | - | - | - | - |
| (Triodo-propenyl N-cyclo-hexyl-carbamate) | 20 | + | + | + | + | + |
| | 10 | + | + | + | + | + |
| Example 5 | 100 | - | - | - | - | - |
| (Triodo-propenyl N-p-chloro-phenyl-carbamate) | 20 | - | - | - | - | - |
| | 10 | - | - | - | - | - |

In the above table "+" indicates presence of fungal growth and "-" indicates absence of fungal growth.

The results indicate that both triiodopropenyl N-cyclohexyl carbamate and triiodopropenyl N-p-chlorophenyl carbamate are effective fungicides at or below 100 ppm.

## Claims

1. A compound of the formula:

$$[I_2C = CI(CH_2)_nOCONH]_mR$$

wherein R is alkyl, cycloalkyl, aryl, aralkyl or alkyl aryl having from 1 to 20 carbon atoms and up to m linkages each R being unsubstituted or substituted by a group selected from hydroxy, lower alkoxy and halo and m and n are independent integers from 1 to 3.

2. A compound according to Claim 1 wherein R is optionally substituted lower alkyl, $C_{2-6}$alkylene, monocyclic aryl or monocyclic arylene.

3. A compound according to Claim 1 wherein R is selected from methyl, ethyl, propyl, butyl, phenyl, 4-chlorophenyl, 3,4-dichlorophenyl, hexamethylene, isophoron-di-yl, methylene bis(4-phenylyl), 2,4-tolylene and 2,6-tolylene.

4. A process for the preparation of a compound according to any one of Claims 1 to 3 which comprises reacting a triiodoalkenol of the formula:

$$I_2C = CI(CH_2)_nOH$$

with an isocyanate of the formula $R(NCO)_m$.

5. A process for the preparation of a compound according to any one of Claims 1 to 3 which comprises iodinating an alkynyl carbamate of the formula:

$$[HC \equiv C(CH_2)_nOCONH]_mR$$

6. A process for the preparation of a compound according to any one of Claims 1 to 3 which comprises iodinating a monoiodoalkynyl carbamate of the formula:

$$[IC \equiv C(CH_2)_nOCONH]_mR$$

7. A method for the protection of a medium, which is susceptible to attack by micro-organisms, against such attack or, for controlling or preventing the proliferation of micro-organisms in a medium already infected thereby, which comprises adding to such medium a biocidal amount of a compound according to any one of Claims 1 to 3.

8. A method according to Claim 7 wherein the micro-organisms are fungi.

9. A method according to Claim 7 or Claim 8 wherein the medium is selected from the group comprising a water-cooling system liquor, a paper mill liquor, a water-based paint or adhesive, an aqueous oil emulsion and a synthetic cutting fluid and the biocide is present in an amount from 1 to 1000 ppm.

10. A method according to Claim 7 or Claim 8 wherein the medium is a paint film on a substrate and the biocide is present in an amount from 500 to 10,000 ppm based on the total weight of the paint before its application to the substrate.

RGP/MH
17.12.1979